# EUROPEAN PATENT APPLICATION

(11) **EP 3 009 055 A1**
(43) Date of publication of application: **20.04.2016**
(21) Application number: 14826646.3
(22) Date of filing: 15.07.2014
(51) Int. Cl.: A47J 45/07, A47J 45/10, A47J 36/34

(54) **TWO-HANDED ATTACHABLE-AND-DETACHABLE HANDLE FOR COOKING VESSELS**

(30) Priority: 17.07.2013 KR 20130084146
(71) Applicant: Yang, Won Jun, Namyangju-si, Gyeonggi-do 472-501 (KR)
(72) Inventor: Yang, Won Jun, Namyangju-si, Gyeonggi-do 472-501 (KR)
(74) Representative: Hocking, Adrian Niall
(86) International application number: PCT/KR2014/006358
(87) International publication number: WO 2015/009011

(57) **Abstract**

The present invention relates to a two-handled attachable-and-detachable handle for a cooking vessel that is detachably coupled to both sides of a cooking vessel so that a heavy vessel can be easily lifted by balancing the cooking vessel. The handle includes: a body 10 having a stepped side 11 being in contact with the outer side of the cooking vessel 50 at the front end; a sliding unit 20 including a sliding plate 21 that has an attaching lever 22 being in contact with the inner side of the cooking vessel at the front end and longitudinally slidably attached to the body, first elastic springs 23 that elastically support the rear side of the sliding plate, and a rotary roller 24 that is rotatably fixed to the rear end of the sliding plate 11; a gap adjusting unit 30 including a pressing lever that is hinged-coupled to the body 10 at the front end to move the sliding plate backward when moving downward, a gap adjusting member 32 that changes the gap W between the stepped side of the body and an attaching lever of the sliding plate, a gap adjusting knob 34 that rotates the gap adjusting member, and a detent mechanism 35 that integrally operates the pressing lever and the gap adjusting member; an actuating unit 40 that locks the pressing lever to fix the sliding plate or unlocks the pressing lever; and a cover 15 that is fastened to the upper portion of the body and has an opening 16 for rotating the pressing lever.

## Description

### [Technical Field]

The present invention relates to an attachable-and-detachable handle for a cooking vessel that is detachably coupled to a cooking vessel particularly, a two-handed attachable-and-detachable handle for a cooking vessel that is detachably coupled to both sides of a cooking vessel so that a cooking vessel can be balanced and a heavy cooking vessel can be easily lifted.

### [Background Art]

In general, handles are attached to cooking vessels for cooking food with heat to allow a user to easily lift up and conveniently carry the cooking vessels, in which cooking vessels with a handle only at a side are called one-handed cooking vessels and cooking vessels with handles at both sides are called two-handed cooking vessels.

One-handed cooking vessels are used as small cooking vessels with small sizes such as frying pans having relatively large area and small height, while two-handed cooking vessels are used as large cooking vessels having a large height relative to the area such as a pot.

However, when the handles are fixed to cooking vessels, high-temperature heat transfers to the handles and handles are heated while the cooking vessels are heated for cooking. When a user holds the heated handles, he/she may be burned, so he/she has to use a dishrag or thick gloves to lift the cooking vessels. Further, a user may drop the cooking vessels because he/she holds the cooking vessels in an unstable position, and in this case, the cooked food has to be thrown away and the user may get burned by the hot food or the cooking vessels.

Further, when handles are integrally formed with a cooking vessel, a large space is required to keep the vessel due to the handle protruding outward and dirt may stick to the portions around the handle and rot even after washing, so it is bad in terms of sanitation.

Accordingly, an attachable-and-detachable handle that is manufactured separately from a cooking vessel and detachably attached to a cooking vessel if necessary has been recently developed, and various attachable-and-detachable handles for cooking vessels are disclosed in the following patent documents.

Patent documents 1 and 2 provide handles for cooking vessels that can be simply attached/detached by locking/unlocking it at a time and can be used regardless of the thickness of cooking vessels because they are locked by a gear and a stopper, while patent document 3 proposes an attachable-and-detachable handle that is separably coupled to a cooking vessel through a simple operation and can prevent a safety accident by preventing separation from a cooking vessel due to carelessness in use.

Further, patent document 4 provides an attachable-and-detachable handle for a cooking vessel that includes: a body having a front end formed to come in contact with an outer side of a cooking vessel; a sliding part slidably coupled to the body with the front end in close contact with the inner side of the cooking vessel; an operation lever controlling front/rear movement of a sliding plate of the sliding part by compression and restoration of an elastic spring; a gap adjusting locking part elastically supported by the elastic spring and having saw tooth-shaped locking protrusions locked in comb-shaped locking grooves of the sliding plate step by step by operation of the operation lever to adjust the gap from the outer side of the cooking vessel; and a releasing button separating the cooking vessel and an attachable-and-detachable piece by separating the saw tooth-shaped locking protrusions from the comb-shaped locking grooves in order that the handle can be stably coupled to a cooking vessel by adjusting the gap step by step to fit to the thickness regardless of the thickness of the outer side of the cooking vessels. According, productivity and convenience can be improved.

However, those attachable-and-detachable handles are focused on one-handle cooking vessels, so when a large amount of food is cooked, it is difficult to lift up a cooking vessel and the food in the cooking vessel may overflow.

In particular, in the attachable-and-detachable handle for a cooking vessel disclosed in patent document 4, the comb-shaped locking grooves and the saw tooth-shaped locking protrusions are engaged, so the structure is complicated and it is required to adjust the position of the attachable-and-detachable piece in accordance with the thickness of cooking vessels.

### [Prior Art Document]

(Patent Document 1) KR20-0303457 Y1
(Patent Document 2) KR10-2004-0033798 A
(Patent Document 3) KR10-2007-0029892 A
(Patent Document 4) KR10-0831260 B1

### [Disclosure]

### [Technical Problem]

In order to solve the problems in the related art, an object of the present invention is to provide a two-handled attachable-and-detachable handle for a cooking vessel that is detachably coupled to both sides of a cooking vessel to balance the cooking vessel so that a heavy cooking vessel can be easily lifted and food in a cooking vessel does not overflow.

### [Technical Solution]

In order to achieve the objects of the present invention, a two-handled attachable-and-detachable handle for a cooking vessel that is detachably coupled to both sides of a cooking vessel, includes: a body having a stepped side being in contact with the outer side of the cooking vessel at the front end; a sliding unit including a sliding plate that has an attaching lever being in contact with the inner side of the cooking vessel at the front end and longitudinally slidably attached to the body, first elastic springs that are disposed on the body and elastically support the rear side of the sliding plate, and a rotary roller that is rotatably fixed to the rear end of the sliding plate; a gap adjusting unit including a pressing lever that is hinged-coupled to the body at the front end to move the sliding plate backward, a gap adjusting member that is disposed in a cam groove of the sliding plate, under the pressing lever and changes the gap between the stepped side of the body and an attaching lever of the sliding plate, a gap adjusting knob that has a coupling protrusion inserted in a coupling groove of the gap adjusting member through the pressing lever to rotate the gap adjusting member, and a detent mechanism that integrally operates the pressing lever and the gap adjusting member regardless of the position of the gap adjusting member; an actuating unit that is disposed at the rear end of the body and locks the pressing lever to fix the sliding plate or unlock the pressing lever; and a cover that is fastened to the upper portion of the body and has an opening for rotating the pressing lever of the gap adjusting unit.

Further, according to the two-handled attachable-and-detachable handle for a cooking vessel of the present invention, a boss protrudes at the center of the front end of the body and a guide hole is formed in the sliding plate to insert the boss so that the sliding plate is moved straight.

Further, according to the two-handled attachable-and-detachable handle for a cooking vessel of the present invention, the gap adjusting member includes three gap adjusting portions extending difference distances from the center and having a curved surface at the lower end being in contact with the rotary roller of the sliding unit, and the detent mechanism is disposed on any one of the three gap adjusting portions.

Further, according to the two-handled attachable-and-detachable handle for a cooking vessel of the present invention, a positioning protrusion corresponding to any one of the gap adjusting portions protrudes on the top of the gap adjusting knob.

Further, according to the two-handled attachable-and-detachable handle for a cooking vessel of the present invention, the detent mechanism includes a detent ball received in any one of a plurality of detent groove formed on the bottom of the pressing lever to prevent the gap adjusting member from rotating and a second elastic spring received in a receiving groove formed on the top of the gap adjusting member and elastically supporting the detent ball.

Further, according to the two-handled attachable-and-detachable handle for a cooking vessel of the present invention, the actuating unit includes a locking protrusion locking the pressing lever by being inserted in a locking groove formed at the lower portion of the rear end of the pressing lever, a releasing button slidably formed at the rear end of the body, having the locking protrusion at the front end, and partially protruding outward from the rear end of the body, and a third elastic spring disposed at the rear end of the body and elastically supporting the releasing button.

### [Advantageous Effects]

The two-handled attachable-and-detachable handle for a cooking vessel of the present invention, is detachably coupled to both symmetric sides on a cooking vessel, so it is possible to easily lift a heavy cooking vessel and prevent the food in the cooking vessel from overflowing by balancing the cooking vessel.

Further, according to the two-handled attachable-and-detachable handle for a cooking vessel of the present invention, it is possible to adjust the gap between the stepped side of the body and the attaching lever of the sliding plate using the gap adjusting member, so the handle can be applied to cooking vessels regardless of the thickness of the cooking vessels.

Further, according to the two-handled attachable-and-detachable handle for a cooking vessel of the present invention, after the position of the gap adjusting member is determined by the gap adjusting knob, the pressing lever moving the sliding plate is locked or unlocked with the gap adjusting member fixed not to be rotated by the detent mechanism, so the gap between the stepped side of the body and the attaching lever of the sliding plate is not changed in use, so the handle can be safely used.

Further, according to the two-handled attachable-and-detachable handle for a cooking vessel of the present invention, the movement of the sliding plate is limited by the boss inserted in the guide hole, so shaking of the sliding plate is minimized without noise.

Further, according to the two-handled attachable-and-detachable handle for a cooking vessel of the present invention, the curved bottoms of the gap adjusting portions of the gap adjusting member are in contact with the rotary roller of the sliding unit, so operational noise is minimized.

Further, according to the two-handled attachable-and-detachable handle for a cooking vessel of the present invention, the positioning protrusion is disposed on the top of the gap adjusting knob, so it is possible to quickly check the rotational position of the gap adjusting member.

Further, according to the two-handled attachable-and-detachable handle for a cooking vessel of the present invention, the detent ball in an any one of the gap adjusting portions is partially received in the detent groove on the bottom of the pressing lever, the gap adjusting member and the pressing lever are integrally moved.

Further, according to the two-handled attachable-and-detachable handle for a cooking vessel of the present invention, the pressing protrusion integrally formed with the releasing button is fitted in the locking groove of the pressing lever, so the pressing lever is locked or unlocked; therefore, it is possible to separate the handle from a cooking vessel only by pushing the releasing button and couple the handle to a cooking vessel only by pressing the pressing button, to convenience is improved.

### [Description of Drawings]

FIG. 1 is an exploded perspective view of a two-handled attachable-and-detachable handle for a cooking vessel according to the present invention.
FIG. 2 is an exterior perspective view illustrating a two-handled attachable-and-detachable handle for a cooking vessel of the present invention.
FIG. 3 is a cross-sectional view illustrating a two-handled attachable-and-detachable handle for cooking vessels of the present invention.
FIGS. 4 to 6 are views illustrating changes in position of a gap adjusting member in accordance with thicknesses of cooking vessel.

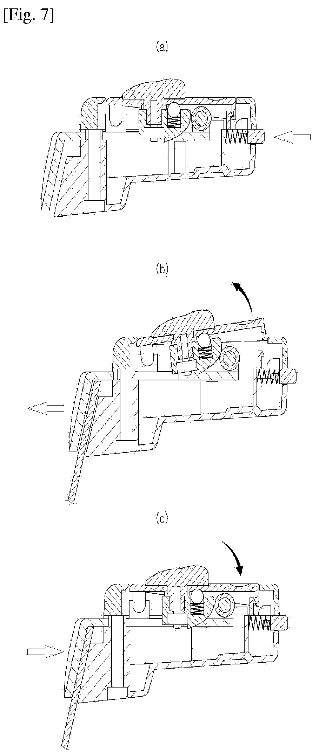

FIG. 7 is a view illustrating a process of coupling a two-handled attachable-and-detachable handle for a cooking vessel of the present invention to a cooking vessel.
FIG. 8 is a view illustrating use of a two-handled attachable-and-detachable handle for a cooking vessel of the present invention.
FIG. 9 is a view illustrating an example when the present invention is applied to a one-handled handle.

### [Modes of the Invention]

A two-handled attachable-and-detachable handle for a cooking vessel of the present invention will be described hereafter with reference to the accompanying drawings.

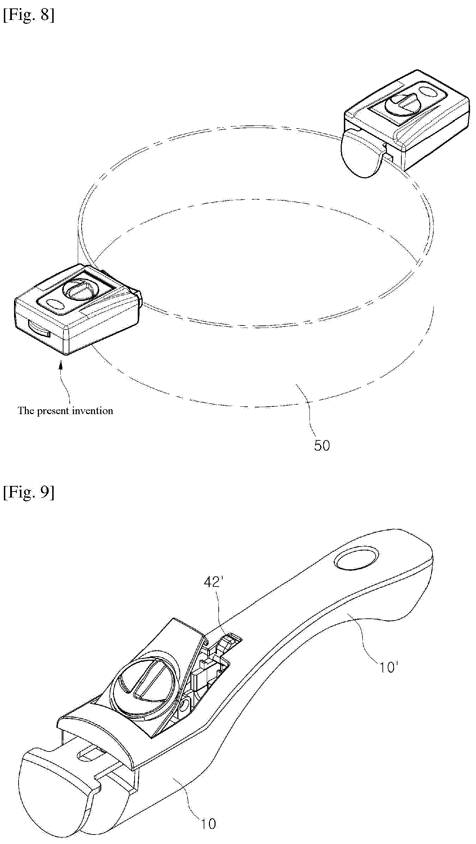

A two-handled attachable-and-detachable handle for a cooking vessel according to the present invention is attached symmetrically to both sides of a cooking vessel 50, as illustrated in FIG. 8.

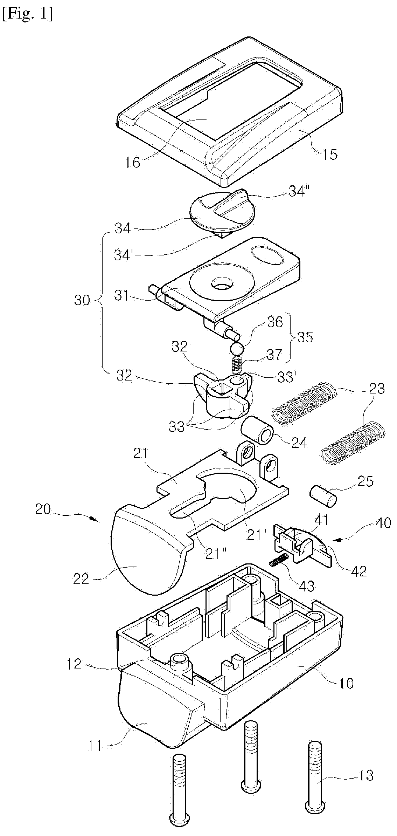

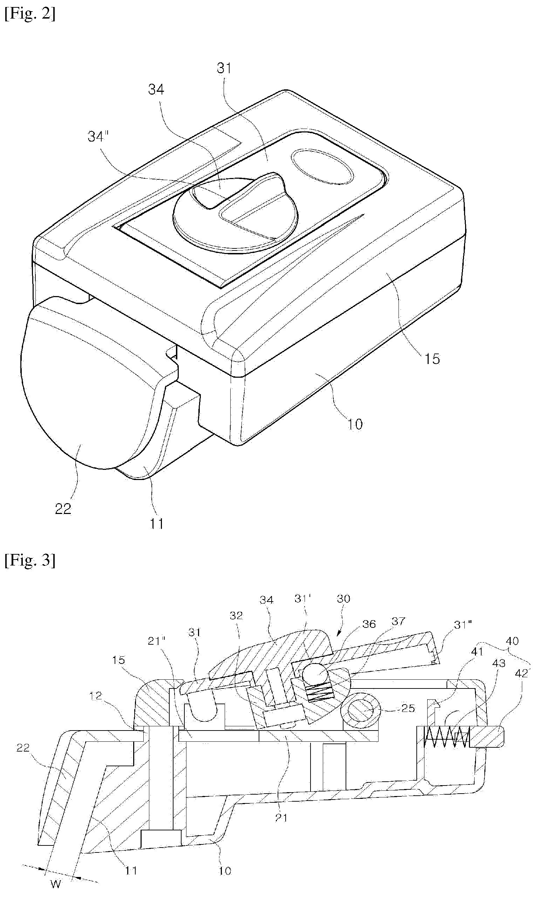

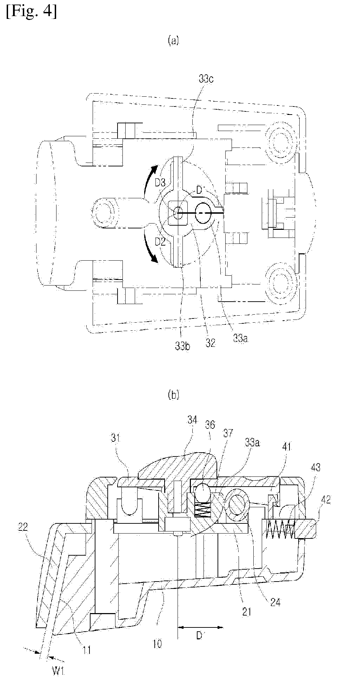

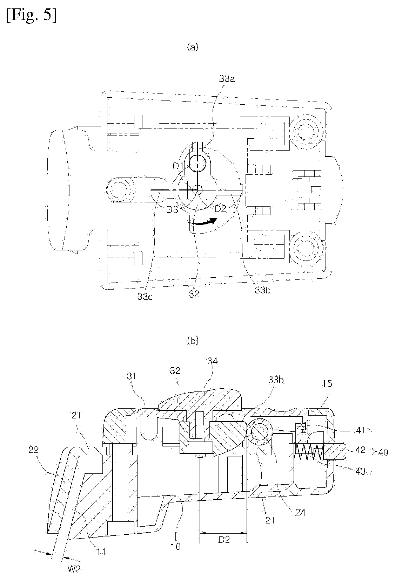

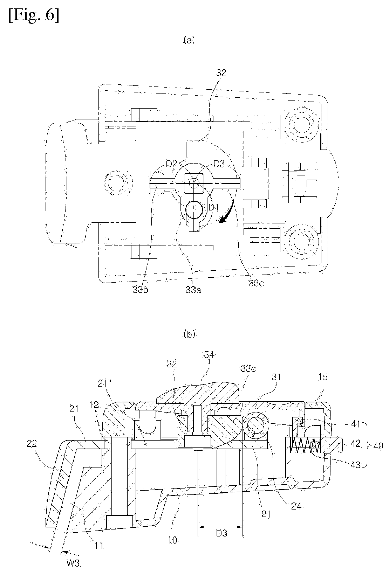

The two-handled attachable-and-detachable handle for a cooking vessel, as illustrated in FIGS. 1 to 6, includes: a body 10 having a stepped side 11 being in contact with the outer side of the cooking vessel 50 at the front end; a sliding unit 20 including a sliding plate 21 that has an attaching lever 22 being in contact with the inner side of the cooking vessel 50 at the front end and longitudinally slidably attached to the body 10, first elastic springs 23 that are disposed on the body 10 and elastically support the rear side of the sliding plate 21, and a rotary roller 24 that is rotatably fixed to the rear end of the sliding plate 11 by a fixing pin 25; a gap adjusting unit 30 including a pressing lever 31 that is hinged-coupled to the body 10 at the front end to move the sliding plate 21 backward, a gap adjusting member 32 that is disposed in a cam groove 21' of the sliding plate 21, under the pressing lever 31 and changes the gap W between the stepped side 11 of the body 10 and an attaching lever 22 of the sliding plate 21, a gap adjusting knob 34 that has a coupling protrusion 34' inserted in a coupling groove 32' of the gap adjusting member 32 through the pressing lever 31 to rotate the gap adjusting member 32, and a detent mechanism 35 that integrally operates the pressing lever 31 and the gap adjusting member 23 regardless of the position of the gap adjusting member 32; an actuating unit 40 that is disposed at the rear end of the body 10 and locks the pressing lever 31 to fix the sliding plate 21 or unlock the pressing lever 31; and a cover 15 that is fastened to the upper portion of the body 10 by bolts 13 and has an opening for rotating the pressing lever 31 of the gap adjusting unit 30.

A boss 12 protrudes at the center of the front end of the body 10 and a guide hole 21" is formed in the sliding plate 21 to insert the boss so that the sliding plate 21 is moved straight. Accordingly, while the sliding plate 21 is moved forward/backward by force of the first elastic springs 23, the sliding plate 23 is moved straight without shaking.

The gap adjusting member 32 includes three gap adjusting portions 33 extending difference distances from the center and having a curved surface at the lower end being in contact with the rotary roller 24 of the sliding unit 20, and the detent mechanism 35 is disposed on any one of the three gap adjusting portions 33.

Herein, it is preferable that the gap adjusting portions 33 are arranged with intervals of 90 degrees at three positions. In detail, a first gap adjusting portion 33a having the largest length D1 extends in the longitudinal direction from the center of the gap adjusting member 32, a second gap adjusting portion 33b having the smallest length D2 extends in the width direction from the center of the gap adjusting member 32, and a third gap adjusting portion 33c having a middle length D3 extends in the opposite direction to the second gap adjusting portion 33b.

As described above, since the distances of the gap adjusting portions 33 of the gap adjusting member 32 are different, the gap between the stepped side 11 of the body 10 and the attaching lever 22 of the sliding plate 21 is changed by the gap adjusting portions 33 coming in contact with the rotary roller 23 when the gap adjusting member 32 is turned. That is, the gap W1 is the largest when the first gap adjusting portion 33a comes in contact with the rotary roller 24, the gap W1 is the smallest when the second gap adjusting portion 33b comes in contact with the rotary roller 24, and the gap W3 is the middle size when the third gap adjusting portion 33c comes in contact with the rotary roller 24.

A positioning protrusion 34" corresponding to any one of the gap adjusting portions 33 protrudes on the top of the gap adjusting knob 34. The positioning protrusion 34" is provided to show the rotational angle of the gap adjusting member 32 and it is preferable that the positioning protrusion 34" is formed in the same direction as the first gap adjusting portion 33a having the large length of the three gap adjusting portions 33.

Further, it is preferable that the coupling groove 32' of the gap adjusting member 32 and the coupling protrusion 34' of the gap adjusting knob 34 are formed in polygonal shapes to prevent relative rotation. Obviously, the coupling groove 32' and the coupling protrusion 34' may be formed in a circle, but in this case, a key-groove coupling structure of a prominence-depression structure has to be formed at a side to prevent the relative rotation.

The detent mechanism 35 includes a detent ball 36 received in any one of a plurality of detent groove 31' formed on the bottom of the pressing lever 31 to prevent the gap adjusting member 32 from rotating and a second elastic spring 37 received in a receiving groove 33' formed on the top of the gap adjusting member 33 and elastically supporting the detent ball 36.

The actuating unit 40 includes a locking protrusion 41 locking the pressing lever 31 by being inserted in a locking groove 31" formed at the lower portion of the rear end of the pressing lever 31, a releasing button 42 slidably formed at the rear end of the body 10, having the locking protrusion 41 at the front end, and partially protruding outward from the rear end of the body 10, and a third elastic spring 43 disposed at the rear end of the body 10 and elastically supporting the releasing button 42.

The two-handled attachable-and-detachable handle for a cooking vessel according to the present invention allows a user to lift a cooking vessel because two handles are symmetrically coupled to the cooking vessel.

One of a pair of two-handled handles is installed first. To this end, when the releasing button 42 at the rear end of the body 10 of the two-handled handle is pressed, the releasing button 42 moves forward and presses the third elastic spring 43. Accordingly, the locking protrusion 41 at the front end of the releasing button 42 is separated from the locking groove 31" of the pressing lever 31 and the locking lever 31 is unlocked. When the force pressing the releasing button 42 is removed after the pressing lever 31 is unlocked, the releasing button 42 is returned by the elastic force of the third elastic spring 43.

The sliding plate 21 is moved forward by the elastic force of the first elastic spring 23 simultaneously with the unlocking of the pressing lever 31, and accordingly, the gap W between the attaching lever 22 of the sliding plate 21 and the stepped side 11 of the body 10 increases. The sliding plate 21 is moved straight without shaking by the boss 12 in the guide hoe 21".

Further, the rotational roller 214 rotatably coupled to the rear end of the sliding plate 21 moves forward in contact with the lower end of the gap adjusting portions 33 of the gap adjusting member 32 and lifts up the gap adjusting member 32. Accordingly, the pressing lever 31 to which the gap adjusting member 32 is coupled on the bottom is rotated, so the rear end of the pressing lever 31 is moved upward through the opening 16 of the cover 15.

As described above, when the gap W between the attaching lever 22 of the sliding plate 21 and the stepped side 11 of the body 10 increases, the attaching lever 22 is brought in contact with the inner side of the cooking vessel 50 by pressing the rear end of the pressing lever 31 after bringing the stepped side 11 in contact with the outer side of the cooking vessel 50. The, the locking protrusion4 1 of the releasing button 42 is put into the locking groove 31" of the pressing lever 31, so the pressing lever 31 is locked and the sliding plate 21 is fixed.

When the rear end of the pressing lever 31 is pressed, the gap adjusting member 32 under the pressing lever 31 is turned with the pressing lever 31 and the gap pressing portions 33 of the gap pressing member 32 rotate and push back the rotary roller 24. Accordingly, the sliding plate 21 moves back while pressing the first elastic spring 23, so the attaching lever 22 is brought in close contact with the inner side of the cooking vessel 50. In this state, when the pressing button 31 is locked, the pressing button 31 and the sliding plate 21 are locked and cannot be moved.

Thereafter, another two-handed handle is coupled to a symmetric position on the cooking vessel 50 in the same way. Accordingly, a user can lift the cooking vessel with both hands holding the two-handled handles, respectively.

In order to separate the two-handled handle from the cooking vessel, a user unlocks the pressing button 31 by pressing the releasing button 42 at the rear end of the body 10. Further, after the two-handled handle is completely separated, the user presses the pressing button 31 to keep the handle.

Although two-handled handle was described above, it may be modified into a one-handled type, as illustrated in FIG. 9. That is, in the releasing button of the actuating member for locking/unlocking the pressing button, a one-handled handle 10' may be achieved by protruding a portion of the end exposed outside at the rear end of the body 10 upward from the body 10 such that the releasing button is moved forward/backward by the protrusion 42' and by extending the rear end of the body 10, so that the handle can be used in a one-handled type. In this case, the ways of coupling/separating the handle to/from a cooking vessel and adjusting the gap are the same as those of the two-handled handle, so the detailed description is not provided. Although the spirit of the present invention was described above with reference to exemplary embodiments, the present invention is not limited to the configuration and operation described with reference to the drawings and may be changed and modified in various ways without departing from the scope of the present invention described in claims. Therefore, it should be understood that all of appropriate modifications, changes, and equivalents are included in the present invention.

## Claims

1. A two-handled attachable-and-detachable handle for a cooking vessel that is detachably coupled to both sides of a cooking vessel, the handle comprising: a body 10 having a stepped side 11 being in contact with the outer side of the cooking vessel 50 at the front end; a sliding unit 20 including a sliding plate 21 that has an attaching lever 22 being in contact with the inner side of the cooking vessel 50 at the front end and longitudinally slidably attached to the body 10, first elastic springs 23 that are disposed on the body 10 and elastically support the rear side of the sliding plate 21, and a rotary roller 24 that is rotatably fixed to the rear end of the sliding plate 11; a gap adjusting unit 30 including a pressing lever 31 that is hinged-coupled to the body 10 at the front end to move the sliding plate 21 backward, a gap adjusting member 32 that is disposed in a cam groove 21' of the sliding plate 21, under the pressing lever 31 and changes the gap W between the stepped side 11 of the body 10 and an attaching lever 22 of the sliding plate 21, a gap adjusting knob 34 that has a coupling protrusion 34' inserted in a coupling groove 32' of the gap adjusting member 32 through the pressing lever 31 to rotate the gap adjusting member 32, and a detent mechanism 35 that integrally operates the pressing lever 31 and the gap adjusting member 23 regardless of the position of the gap adjusting member 32; an actuating unit 40 that is disposed at the rear end of the body 10 and locks the pressing lever 31 to fix the sliding plate 21 or unlock the pressing lever 31; and a cover 15 that is fastened to the upper portion of the body and has an opening 16 for rotating the pressing lever 31 of the gap adjusting unit 30.

2. The handle of claim 1, wherein a boss 12 protrudes at the center of the front end of the body 10 and a guide hole 21" is formed in the sliding plate 21 to insert the boss so that the sliding plate 21 is moved straight.

3. The handle of claim 1, wherein the gap adjusting member 32 includes three gap adjusting portions 33 extending difference distances from the center and having a curved surface at the lower end being in contact with the rotary roller 24 of the sliding unit 20, and the detent mechanism 35 is disposed on any one of the three gap adjusting portions 33.

4. The handle of claim 3, wherein a positioning protrusion 34" corresponding to any one of the gap adjusting portions 33 protrudes on the top of the gap adjusting knob 34.

5. The handle of claim 3, wherein the detent mechanism 35 includes a detent ball 36 received in any one of a plurality of detent groove 31' formed on the bottom of the pressing lever 31 to prevent the gap adjusting member 32 from rotating and a second elastic spring 37 received in a receiving groove 33' formed on the top of the gap adjusting member 33 and elastically supporting the detent ball 36.

6. The handle of any one of claims 1 to 5, wherein the actuating unit 40 includes a locking protrusion 41 locking the pressing lever 31 by being inserted in a locking groove 31" formed at the lower portion of the rear end of the pressing lever 31, a releasing button 42 slidably formed at the rear end of the body 10, having the locking protrusion 41 at the front end, and partially protruding outward from the rear end of the body 10, and a third elastic spring 43 disposed at the rear end of the body 10 and elastically supporting the releasing button 42.
